# EUROPÄISCHE PATENTSCHRIFT

(11) **EP 3 042 104 B1**
(45) Veröffentlichungstag und Bekanntmachung des Hinweises auf die Patenterteilung: **28.03.2018**
(21) Anmeldenummer: 14761353.3
(22) Anmeldetag: 05.09.2014
(51) Int. Cl.: F16H 29/16

(54) **STUFENLOSES GETRIEBE**
CONTINUOUSLY VARIABLE TRANSMISSION
TRANSMISSION À VARIATION CONTINUE

(30) Priorität: 05.09.2013 DE 102013109697
(43) Veröffentlichungstag der Anmeldung: 13.07.2016
(73) Patentinhaber: UMS Maschinenbau GmbH, 93059 Regensburg (DE)
(72) Erfinder: KOBLER, Peter, 93059 Regensburg (DE)
(74) Vertreter: Bittner, Bernhard
(86) Internationale Anmeldenummer: PCT/EP2014/068955
(87) Internationale Veröffentlichungsnummer: WO 2015/032902

(56) Entgegenhaltungen:
- EP-A1- 2 128 494
- WO-A1-2013/128278
- DE-A1- 3 605 211
- DE-A1- 10 234 463
- DE-A1-102008 029 975
- DE-A1-102009 057 292

## Beschreibung

Die Erfindung bezieht sich auf ein stufenloses Getriebe. Ein Getriebe, bei welchem eine Drehzahl eines Drehteils in eine Drehzahl eines anderen Drehteils gewandelt wird, kann auch als stufenloses Getriebe ausgebildet sein. Bei einem solchen ist das Übersetzungsverhältnis der Drehzahlen in einem vorgegebenen Bereich kontinuierlich variabel.

Stufenlose Getriebe sind beispielsweise aus der DE 102 34 463 A1 oder der DE 36 05 211 A1 bekannt, welche jeweils nur geringe Drehmomente zulassen.

Zur Lösung dieses Problems, hat der Erfinder der vorliegenden Anmeldung ein stufenloses Getriebe entwickelt, bei welchem sich ein äußeres Drehteil oder ein inneres Drehteil um zueinander parallele Drehachsen drehen können, die exzentrisch zueinander versetzbar sind (siehe WO 2013/128278 A1, veröffentlicht nach dem vorliegenden Prioritätsdatum). Ein solches stufenloses Getriebe ist für größere Drehmomente als bei dem Stand der Technik geeignet. Hierbei besteht jedoch der Bedarf, das stufenlose Getriebe für den Langzeitbetrieb zu optimieren bzw. seine Lebensdauer zu erhöhen.

Daher ist es Aufgabe der vorliegenden Erfindung, ein stufenloses Getriebe bereitzustellen, welches die Probleme des Standes der Technik löst. Insbesondere soll ein stufenloses Getriebe bereitgestellt werden, bei welchem hohe Drehmomente in der Größenordnung von ca. 100 Nm bis zu mehreren Mega-Nm im Langzeitbetrieb möglich sind.

Die Aufgabe wird durch ein stufenloses Getriebe mit den Merkmalen von Patentanspruch 1 gelöst. Das stufenlose Getriebe umfasst ein äußeres Drehteil, ein inneres Drehteil, das in dem äußeren Drehteil derart angeordnet ist, dass das innere und/oder das äußere Drehteil relativ zueinander drehbar sind, mehrere Koppelmechaniken zur Kopplung des inneren und äußeren Drehteils miteinander, eine Verstelleinrichtung zur exzentrischen Verstellung des inneren und äußeren Drehteils relativ zueinander, eine Pumpe zum Fördern eines Schmierstoffs in das Getriebe entlang einer Mantelfläche des inneren Drehteils, und Dichtelemente, die an dem inneren Drehteil bei den Koppelmechaniken angeordnet sind, oder Düsen zum Fördern einer vorbestimmten Menge an Schmierstoff an die jeweilige Koppelmechanik.

Mit dem stufenlosen Getriebe kann auch bei hohen Drehzahlen und/oder Drehmomenten ein laufruhiger Betrieb des stufenlosen Getriebes realisiert werden. Zudem ist die Lebensdauer des stufenlosen Getriebes gegenüber bisherigen Ausgestaltungen des Standes der Technik verbessert.

Durch eine leichtgewichtige und kostengünstige Ausgestaltung des Getriebes können zudem die Betriebseigenschaften verbessert und die Herstellungskosten gesenkt werden.

Die vorliegende Erfindung betrifft daher weiterhin ein stufenloses Getriebe mit einem äußeren Drehteil, einem inneren Drehteil, das in dem äußeren Drehteil derart angeordnet ist, dass das innere und/oder das äußere Drehteil relativ zueinander drehbar sind, mehreren Koppelmechaniken zur Kopplung des inneren und äußeren Drehteils miteinander und einer Verstelleinrichtung zur exzentrischen Verstellung des inneren und äußeren Drehteils relativ zueinander.

Vorteilhafte weitere Ausgestaltungen der Erfindung sind den abhängigen Patentansprüchen dargelegt.

In einer vorteilhaften Ausführungsform umfasst das stufenlose Getriebe zudem ein Gehäuse zur Aufnahme des stufenlosen Getriebes, wobei besonders bevorzugt die Pumpe zum Fördern des Schmierstoffes in einem Kreislauf in das und/ oder aus dem Gehäuse angeordnet ist.

Gemäß einer weiteren vorteilhaften Variante weist das äußere Drehteil Scheiben auf, welche durch Lagerbolzen für die Koppelmechaniken beabstandet sind.

Gemäß einer weiteren vorteilhaften Ausführungsform weist das äußere Drehteil zwei aneinander befestigte Hülsen auf, welche durch Lagerbolzen für die Koppelmechaniken beabstandet sind.

Bei einer weiteren vorteilhaften Ausführungsform bei dem stufenlosen Getriebe weist eine der Koppelmechaniken ein inneres Koppelmodul, welches an dem inneren Drehteil angeordnet ist, und ein äußeres Koppelmodul auf, welches an dem äußeren Drehteil angeordnet ist, wobei besonders bevorzugt das innere Koppelmodul einen Masseausgleichsbolzen zum Ausgleich einer Masse eines Lagerbolzens mindestens eines Koppelmoduls, bevorzugt genau eines Koppelmoduls und besonders bevorzugt des inneren Koppelmoduls oder des äußeren Koppelmoduls aufweist, mit welchem Lagerbolzen das innere und äußere Koppelmodul dreh/schwenkbar, ähnlich eines Kniegelenks, aneinander befestigt sind.

Zudem weist bei einer weiteren vorteilhaften Ausführungsform das innere Koppelmodul mindestens einen Schlitz zur Aufnahme von mit Vorspannung laminierend aufgewickelten Carbonfasern auf.

Bei einer weiteren vorteilhaften Ausführungsform weist das innere Drehteil mindestens ein aufgewickeltes Blech auf. Besonders bevorzugt ist hierbei das mindestens eine aufgewickelte Blech in einem Rohr angeordnet.

Bei dem stufenlosen Getriebe ist in einer weiteren vorteilhaften Ausführungsform ein unteres Ende eines Klemmkörpers konkav ausgebildet, wobei der Klemmkörper zur Lagerung einer der Koppelmechaniken an dem inneren Drehteil dient. Durch diese Ausbildung kann die Lebensdauer erhöht werden, da auch bei einer gewissen Materialabtragung noch ein zuverlässiger Kontakt mit dem Klemmkörper besteht. Bevorzugt ist die entsprechend andere Kontaktfläche des Klemmkörpers, die sich an dem oberen Ende des Klemmkörpers befindet, konvex ausgebildet.

Bevorzugt ist die innere Kontaktfläche, also die Kontaktfläche des Klemmkörpers in Richtung des inneren Drehteils, konkav und die äußere Kontaktfläche, also die Kontaktfläche des Klemmkörpers in Richtung des äußeren Drehteils, konvex ausgebildet. Bevorzugt kann der Verlauf wenigstens einer Kontaktfläche einer logarithmischen Spirale folgen.

Darüber hinaus ist in einer weiteren vorteilhaften Ausführungsform bei dem stufenlosen Getriebe eine Lagerstelle für ein Verstellelement der Verstelleinrichtung in axialer Richtung mittig an einem Lager- und Führungsmodul angeordnet, welches zur Lagerung des äußeren Drehteils dient.

Bei einer weiteren vorteilhaften Ausführungsform sind das äußere und innere Koppelmodul um einen Winkel gegeneinander verschwenkbar und besonders bevorzugt ist dieser Winkel stets kleiner als 180°. Dadurch kann die Koppelmechanik nicht umklappen.

Bevorzugt schließen die geometrische Verbindung zwischen dem Mittelpunkt des inneren Drehteils und einer ersten Anlenkung des inneren Koppelmoduls einerseits und die geometrische Verbindung zwischen der ersten Anlenkung des inneren Koppelmoduls und einer zweiten Anlenkung des äußeren Koppelmoduls andererseits einen Winkel ein, der kleiner als 180°, bevorzugt kleiner als 179°, 178°, 177°, 176° oder 175° ist. Bevorzugt ist eben genannter Winkel, vorteilhaft zusätzlich zu obiger maximaler Begrenzung, größer als 20° und besonders bevorzugt größer als 30°. Dabei entspricht der ersten Anlenkung des inneren Koppelmoduls bevorzugt die Gelenkachse, bei welcher das innere und das äußere Koppelmodul schwenkbar miteinander verbunden sind, beispielsweise ein Lagerbolzen, und besonders bevorzugt entspricht der ersten Anlenkung des inneren Koppelmoduls das Lager, das als inneres Lager für das äußere Koppelmodul und als äußeres Lager für das innere Koppelmodul dient. Die zweite Anlenkung des äußeren Koppelmoduls entspricht bevorzugt dem Lager, das als äußeres Lager für das äußere Koppelmodul dient.

Bei einer weiteren vorteilhaften Ausführungsform ist die Exzentrizität der Koppelmechanik und/oder des äußeren Drehteils relativ zum inneren Drehteil und/oder die Schwenkbarkeit mit der Verstelleinrichtung mit Anschlägen begrenzt. Bevorzugt erfolgt dies durch Anschläge in der Koppelmechanik, besonders bevorzugt durch eine Begrenzung der relativen Schwenkbarkeit zwischen dem inneren und äußeren Koppelmodul.

Bei einer weiteren vorteilhaften Ausführungsform ist die Exzentrizität der Koppelmechanik zwischen dem Gehäuse und einem Lager- und Führungsmodul, welches zur Lagerung des äußeren Drehteils dient, mit Anschlägen begrenzt.

Bei einer weiteren vorteilhaften Ausführungsform sind in den Gelenkachsen von einem äußeren Lager für das äußere Koppelmodul und/oder von einem Lager, das als inneres Lager für das äußere Koppelmodul und als äußeres Lager für das innere Koppelmodul dient, Anschläge der Koppelmechanik gebildet.

Bei einer weiteren vorteilhaften Ausführungsform umfassen jeweils das äußere Lager für das äußere Koppelmodul und das andere Lager, das als inneres Lager für das äußere Koppelmodul und als äußeres Lager für das innere Koppelmodul dient, jeweils zwei Teile, welche bevorzugt als zwei miteinander drehbar oder starr verbundene Lager ausgestaltet sind. Durch eine derart ausgestaltete Koppelmechanik wird die Sinusfunktion einer Bewegung der Koppelmechanik derart verformt, dass sie sich dem Ideal einer Rechteckfunktion annähert. Dadurch wird eine gleichförmige Drehbewegung am Abtrieb erhalten.

Bevorzugt bewegen sich die inneren und äußeren Koppelmodule nicht um einen Drehpunkt, sondern um zwei Drehpunkte. Besonders bevorzugt ist jeweils der Winkel zwischen den beiden Teilen des äußeren Lagers und des anderen Lagers konstant.

In einer weiteren vorteilhaften Ausführungsform ist bei dem stufenlosen Getriebe ein Schwingungserzeuger mit einem Differenzialgetriebe verschaltet. Bevorzugt ist dieses durch ein Planetenradgetriebe realisiert. Besonders bevorzugt ist darin das Drehzahlverhältnis des Sonnenrads, welches mit dem Abtrieb des Schwingungserzeugers verbunden ist, zu dem Hohlrad gleich 5:1. Bevorzugt wird unter einem Schwingungserzeuger das innere bzw. das äußere Drehteil oder aber die Koppelmechanik/en verstanden. Erfindungsgemäß besteht ein Schmierstoffstrom in axialer Richtung entlang der Mantelfläche des inneren Drehteils. Besonders bevorzugt ist eine Schmierstoffversorgung zwischen dem inneren Drehteil und den Koppelmechaniken, vorteilhaft zwischen dem inneren Drehteil und dem/den inneren Koppelmodul/en, vorgesehen.

Nachfolgend ist die Erfindung unter Bezugnahme auf die beiliegende Zeichnung und anhand von Ausführungsbeispielen näher beschrieben.

Es zeigen:
- Fig. 1: eine dreidimensionale Ansicht eines stufenlosen Getriebes gemäß einem ersten Ausführungsbeispiel;
- Fig. 2: eine Draufsicht auf ein stufenloses Getriebe gemäß dem ersten Ausführungsbeispiel;
- Fig. 3: eine Schnittansicht des stufenlosen Getriebes gemäß dem ersten Ausführungsbeispiel;
- Fig. 4: eine Draufsicht auf ein äußeres Drehteil des stufenlosen Getriebes gemäß einem zweiten Ausführungsbeispiel;
- Fig. 5: einen Schnitt entlang einer Linie A-A in Fig. 4 durch das äußere Drehteil des stufenlosen Getriebes gemäß dem zweiten Ausführungsbeispiel;
- Fig. 6: einen Schnitt entlang einer Linie C-C in Fig. 4 durch das äußere Drehteil des stufenlosen Getriebes gemäß dem zweiten Ausführungsbeispiel;
- Fig. 7: eine Draufsicht auf ein äußeres Drehteil des stufenlosen Getriebes gemäß einem dritten Ausführungsbeispiel;
- Fig. 8: einen Schnitt entlang einer Linie A-A in Fig. 7 durch das äußere Drehteil des stufenlosen Getriebes gemäß dem dritten Ausführungsbeispiel;
- Fig. 9: einen Schnitt parallel zum Radius durch ein inneres Drehteil des stufenlosen Getriebes gemäß einem fünften Ausführungsbeispiel;
- Fig. 10: einen Längsschnitt durch das innere Drehteil des stufenlosen Getriebes gemäß dem fünften Ausführungsbeispiel;
- Fig. 11 und Fig. 12: schematische Darstellungen zur Veranschaulichung eines Aufbaus einer Koppelmechanik des stufenlosen Getriebes gemäß einem sechsten Ausführungsbeispiel;
- Fig. 13: eine schematische Darstellung eines Aufbaus einer Koppelmechanik des stufenlosen Getriebes gemäß einem siebenten Ausführungsbeispiel;
- Fig. 14 bis Fig. 16: Ansichten eines inneren Koppelungsmoduls des stufenlosen Getriebes gemäß einem achten Ausführungsbeispiel;
- Fig. 17 und Fig. 18: Ansichten eines äußeren Koppelungsmoduls des stufenlosen Getriebes gemäß dem achten Ausführungsbeispiel;
- Fig. 19 und Fig. 20: jeweils Ansichten von Varianten für einen Klemmkörper des stufenlosen Getriebes gemäß dem achten Ausführungsbeispiel;
- Fig. 21 und Fig. 22: jeweils Ansichten von weiteren Varianten für einen Klemmkörper des stufenlosen Getriebes gemäß dem achten Ausführungsbeispiel;
- Fig. 23 bis Fig. 26: jeweils Varianten für eine Axialsicherung eines Bolzens oder einer Welle des stufenlosen Getriebes gemäß dem achten Ausführungsbeispiel;
- Fig. 27 bis Fig. 31: jeweils Varianten für eine radiale Verdrehsicherung eines Bolzens oder einer Welle des stufenlosen Getriebes gemäß dem achten Ausführungsbeispiel und
- Fig. 32: eine Schnittansicht einer bevorzugten Ausführungsform des stufenlosen Getriebes zur Illustration einer Variante für eine Schmierstoffversorgung.

In den Figuren sind gleiche oder funktionsgleiche Elemente, sofern nichts anderes angegeben ist, mit denselben Bezugszeichen versehen.

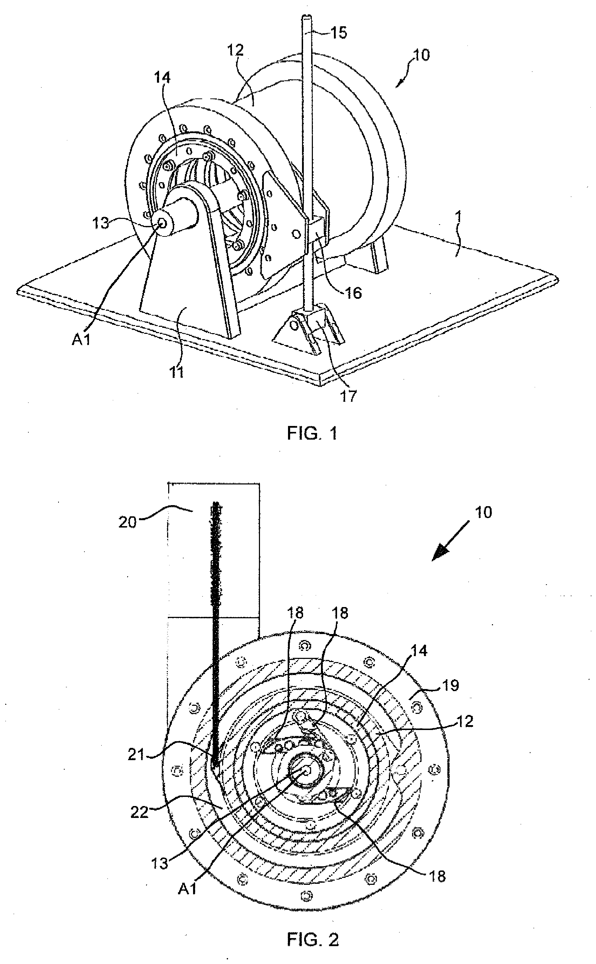

Fig. 1 zeigt eine Grundplatte 1, an welcher ein stufenloses Getriebe 10 ohne Gehäuse montiert ist. Die Grundplatte 1 kann je nach Bedarf auch anders ausgestaltet sein. Das Getriebe 10 hat ein erstes Lager- und Führungsmodul 11 und ein zweites Lager- und Führungsmodul 12, sowie ein inneres Drehteil 13, das um seine Achse A1 drehbar ist, ein äußeres Drehteil 14 und ein Verstellelement 15, das in einem Führungselement 16 geführt und mit einem Lager 17 drehbar gelagert ist.

Wie in Fig. 2 gezeigt, in welcher die Grundplatte 1 nicht dargestellt ist, hat das stufenlose Getriebe 10 zudem mehrere Koppelmechaniken 18 und ein Gehäuse 19, das um das zweite Lager- und Führungsmodul 12 herum angeordnet ist, sowie optional auch eine Verstellantriebseinrichtung 20 und eine Lagerstelle 21 für das Verstellelement 15. Ein Befestigungsflansch für das zweite Lager- und Führungsmodul 12 kann im Gehäuse 19 integriert sein. Bei dem stufenlosen Getriebe 10 gemäß Fig. 1 und Fig. 2 koppeln die Koppelmechaniken 18 das als Welle ausgeführte innere Drehteil 13 und das hohlzylindrisch ausgeführte äußere Drehteil 14. Damit kann eine Wandlung der Drehzahl des inneren Drehteils 13 in eine Drehzahl des äußeren Drehteils 14 oder umgekehrt ausgeführt werden. Bei dem in Fig. 1 und Fig. 2 dargestellten Fall ist das Verhältnis der Drehzahlen von innerem Drehteil 13 und äußerem Drehteil 14 gleich 1:1, so dass das stufenlose Getriebe 10 weder eine Übersetzung noch Untersetzung ausführt. Das innere und äußere Drehteil 13, 14 sind in diesem Fall mit der gleichen Drehzahl drehbar.

Bei dem stufenlosen Getriebe 10 dient das erste Lager- und Führungsmodul 11 zum Lagern und Führen des inneren Drehteils 13. Das innere Drehteil 13 ist an dem ersten Lager- und Führungsmodul 11 drehbar gelagert und in dem äußeren Drehteil 14 angeordnet, welches außen um das innere Drehteil 13 angeordnet ist. Das erste Lager- und Führungsmodul 11 stellt sicher, dass das innere Drehteil 13 ausschließlich eine Drehbewegung um seine Achse A1 ausführen kann.

Demgegenüber dient das zweite Lager- und Führungsmodul 12 zum Lagern und Führen des äußeren Drehteils 14. Das zweite Lager- und Führungsmodul 12 hat wie das äußere Drehteil 14 eine hohlzylindrische oder trommelförmige Form und lagert das äußere Drehteil 14 an seiner Außenseite. Das zweite Lager- und Führungsmodul 12 lagert das äußere Drehteil 14 gegenüber dem inneren Drehteil 13 schwenkbar. Die Schwenkverstellung kann mit dem Verstellelement 15 in Form einer Gewindespindel ausgeführt werden. Hierbei ist das Verstellelement 15 in dem Führungselement 16 nach oben in Fig. 1 oder Fig. 2 zu bewegen, um bei dem stufenlosen Getriebe 10 eine Übersetzung Ü > 1 einzustellen. Wird das Verstellelement 15 in dem Führungselement 16 jedoch nach unten in Fig. 1 oder Fig. 2 bewegt, ist bei dem stufenlosen Getriebe 10 ebenfalls eine Übersetzung Ü > 1 einstellbar. Dabei ist das äußere Drehteil 14 so verstellbar, dass das innere Drehteil 13 exzentrisch zu der Achse des äußeren Drehteils 14 angeordnet ist. In solchen Fällen ist die Übersetzung des stufenlosen Getriebes 10 ungleich 1:1. Insbesondere hat sich bei Versuchen herausgestellt, dass die Übersetzung von außen nach innen, also von dem äußeren Drehteil 14 auf das innere Drehteil 13, anders als eine Übersetzung von innen nach außen ist, also von dem inneren Drehteil 13 auf das äußere Drehteil 14. Insbesondere kann mit dem Verstellelement 15 eine dreidimensionale Schwenkbewegung des äußeren Drehteils 14 realisiert werden. Die Punkte der Schwenklagerung sollten möglichst weit auseinander liegen.

Wie in Fig. 2 veranschaulicht, kann das Verstellelement 15 optional auch mit der Verstellantriebseinrichtung 20 bewegt werden, die als Motor und insbesondere als Spindelgetriebemotor, usw., oder als Kolben, wie insbesondere ein doppelwirkender Hydraulikkolben, ein doppelwirkender Pneumatikkolben, usw., ausgeführt ist. Hierfür kann die Verstellantriebseinrichtung 20, genauer gesagt die Lagerstelle 21 in Fig. 2 auch in axialer Richtung des zweiten Lager- und Führungsmoduls 12 mittig an dem zweiten Lager- und Führungsmodul 12 angeordnet sein. Demzufolge ist die Verstellantriebseinrichtung 20 in Fig. 2 auch in axialer Richtung mittig zum äußeren Drehteil 14 angeordnet. Bei einer solchen Anordnung ist die Krafteinleitung besonders vorteilhaft. Die Anordnung kann jedoch auch an jedem Punkt längs des Zylinders erfolgen. Insgesamt ist jedoch zu berücksichtigen, dass die Punkte der Verstell- bzw. Schwenklagerung möglichst weit auseinander liegen sollten, um eine möglichst hohe Torsionsstabilität von dem zweiten Lager-und Führungsmodul 12 einhergehend mit dem Gehäuse 19 zu erhalten.

Gemäß der Konstruktion des stufenlosen Getriebes 10 gemäß Fig. 2 haben die Funktionsteile, wie zweites Lager- und Führungsmodul 12, äußeres Drehteil 14, Gehäuse 19 kreisringähnliche Formen. Dies hat seinen Grund darin, dass annähernd kreisringförmige zylindrische Teile in ihrer Mantelebene bezogen auf ihren Durchmesser extrem hohe Torsions-bzw. Biegekräfte aufnehmen können. Das innere Drehteil 13 in Fig. 2 weist den geringsten Durchmesser auf, aber die größte Wandstärke. Die Wandstärke der einzelnen Funktionsteile nimmt mit Zunahme des Durchmessers der einzelnen Funktionsteile ab. Aus diesem Grunde können die Wandstärken gering gehalten werden, was unabhängig vom Material geringes Gewicht bei höchster Festigkeit nach sich zieht.

Der in Fig. 2 dargestellte Ringspalt 22 zwischen dem Gehäuse 19 und dem zweiten Lager-und Führungsmodul 12 ist nicht unbedingt erforderlich. Das Gehäuse 19 kann auch zumindest in einem Teilbereich direkt anliegend an dem zweiten Lager- und Führungsmodul 12 angeordnet sein.

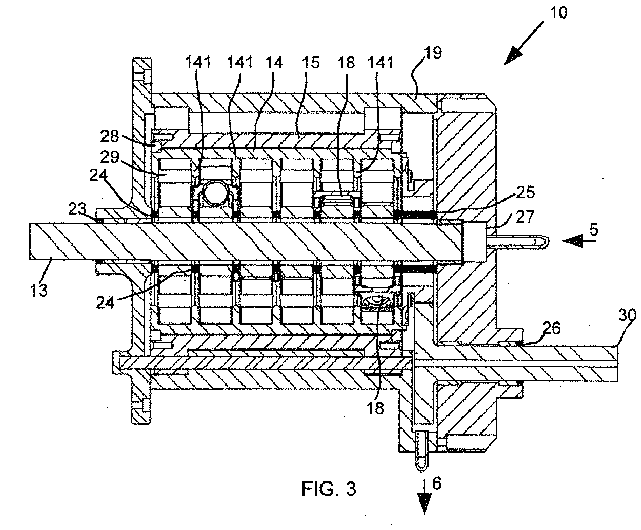

Fig. 3 zeigt das stufenlose Getriebe 10 in einer Variante mit sechs Koppelmechaniken 18 in einem Längsschnitt. Es können aber auch mehr oder weniger Koppelmechaniken 18 vorhanden sein. Die Koppelmechaniken 18 sind jeweils zwischen zwei Stegen 141 des äußeren Drehteils 14 angeordnet. Die Stege 141 kragen jeweils in radialer Richtung des äußeren Drehteils 14 in Richtung auf das erste Drehteil 13 aus. Der Übersichtlichkeit halber sind in Fig. 3 nur ein Teil der Koppelmechaniken 18 und der Stege 141 mit einem Bezugszeichen versehen. In Fig. 3 sind zudem erste bis vierte Dichtungselemente 23, 24, 25, 26, eine Aussparung 27, ein Lager 28 zur Lagerung des äußeren Drehteils 14 und Lagerbolzen 29 für die Koppelmechaniken 18 dargestellt. Der Übersichtlichkeit halber sind in Fig. 3 nur zwei der zweiten Dichtungselemente 24 mit einem Bezugszeichen versehen. Um das innere Drehteil 13 sind die Koppelmechaniken 18 über einen Klemmkörperfreilauf bzw. eine Radiallagerung angeordnet und zudem mit dem äußeren Drehteil 14 verbunden. In dem Koppelsystem aus Koppelmechaniken 18 und Klemmkörperfreilauf bzw. Radiallagerung entstehen entsprechend ihren Wirkwinkeln einhergehend mit den Massebeschleunigungen beim Betrieb des stufenlosen Getriebes 10 variierend sehr hohe Zug- bzw. Druckkräfte in einer Größenordnung von ca. 4000 N bei 160 Nm Abgabe Drehmoment, welche Kräfte zwischen dem innere Drehteil 13 und dem äußeren Drehteil 14 wirken. Als Folge davon müssen alle Bauteile des stufenlosen Getriebes 10 diesen hohen Kräften standhalten. Daher ist das äußere Drehteil 14 an seiner Innenseite mit den Stegen 141 in kreisringförmige Kammern unterteilt, die zwei Aufgaben besitzen. Zum einen geben die Stege 141 und damit die Kammern dem äußeren Drehteil 14 eine extrem hohe Radialstabilität und Formtreue, zum anderen bilden die kreisringförmigen Stege 141 eine Aufnahme zur Lagerung der Koppelmechaniken 18.

Zudem hat das stufenlose Getriebe 10 in Fig. 3 eine Pumpe 30, welche einen Schmierstoff in Richtung eines Pfeils 5, also in axialer Richtung, in das Gehäuse 19 pumpen kann. In Richtung eines Pfeils 6, also in radialer Richtung, kann die Pumpe 30 den Schmierstoff aus dem Gehäuse 19 pumpen. Damit kann die Pumpe 30 in axialer Richtung alle um das innere Drehteil 13 angeordneten Lagerstellen und die Koppelmechaniken 18 mit Schmierstoff versorgen. Dadurch können die Temperaturen des stufenlosen Getriebes 10 niedrig gehalten werden, so dass möglichst wenig Reibung vorhanden ist. Der Schmierstoff 10 kann insbesondere Öl sein.

Wie in Fig. 3 gezeigt, wird der Schmierstoff von der Pumpe 30 in die kreisringförmige Aussparung 27 axial und oberhalb der Mantellinie des inneren Drehteils 13 eingepumpt. Zudem sind die hintereinander angeordneten Koppelelemente 18 axial gegeneinander und gegenüber dem Gehäuse 19 mit den ersten bis vierten Dichtungselementen 23, 24, 25, 26 abgedichtet, damit auch das von der Schmierstoffversorgung am weitesten entfernte Koppelsystem/Lager oder Kupplungssystem/Lager ausreichend mit Schmierstoff versorgt wird. Die vorbeschriebene Abdichtung ist derart ausgestaltet, dass sie für den Schmierstoff in radialer Richtung teildurchlässig wirkt.

Demzufolge sind die zweiten Dichtelemente 24 in axialer Richtung des inneren Drehteils 13 um das innere Drehteil 13 angeordnet. Die zweiten Dichtelemente 24 können als Anlauf-/Dichtscheiben ausgeführt sein, welche in radialer Richtung Riefen oder Kanäle oder Bohrungen aufweisen, welche den Zweck haben, eine bestimmte Menge an Schmierstoff an die Koppelmechaniken 18 und die restlichen Lagerstellen gelangen zu lassen. Im Betrieb des stufenlosen Getriebes 10 wird der Schmierstoff durch die Zentrifugalkraft vom inneren Drehteil 13 nach außen in Richtung auf das äußere Drehteil 14 und das Gehäuse 19 gefördert. An der Gehäuseinnenwand läuft der Schmierstoff an die tiefste Stelle und kann von dort aus von der Pumpe 30 angesaugt und in Richtung des Pfeils 6 aus dem Gehäuse 19 gefördert werden. Somit verteilt die Zentrifugalkraft der rotierenden Teile einen Anteil des Schmierstoffes effektiv an die Koppelmechaniken 18 und alle anderen Lagerstellen. Die Pumpe 30 kann auch mit Zahnrädern realisiert werden.

Somit besteht bei dem stufenlosen Getriebe 10 gemäß dem ersten Ausführungsbeispiel ein hochwirksamer Schmierstoffkreislauf, bei welchem das innere Drehteil 14 als massives Teil ausgeführt ist. Das innere Drehteil 14 weist beispielsweise keine Ölversorgungsbohrungen auf, die eine Schwächung der Wellenstatik darstellen und von welchen Bruchlinien ausgehen können. Dies ist ein großer Vorteil, da das innere Drehteil 14 bezogen auf alle anderen zylindrischen Bauteile des stufenlosen Getriebes 10 immer das schwächste Glied in der Konstruktion darstellt. Grund dafür ist, dass das innere Drehteil 14 immer bezogen auf die anderen zylindrischen Bauteile den geringsten Durchmesser hinsichtlich ihrer Spannweite aufweist, und deswegen ihre Durchbiegung am stärksten ist.

Aus diesem Grund kann das innere Drehteil 14 auch aus Hochleistungswerkstoffen gefertigt sein, wie z.B. Spezialstähle, usw., die sehr hohe Zug/Druckspannung aufweisen, oder mit möglichst großen Durchmessern.

In einer Modifikation des ersten Ausführungsbeispiels sind die Koppelmechaniken 18 ohne axialen Abstand zum inneren Drehteil 13 angeordnet. In diesem Fall entfallen die zweiten Dichtelemente 24. Die schmierstofffördernden Riefen oder Kanäle oder Bohrungen sind dann direkt seitlich an den Koppelmechaniken 18 angebracht.

Gemäß einer weiteren Modifikation des ersten Ausführungsbeispiels kann der Schmierstoff durch stationäre Düsen am Gehäuse 19 auf die Koppelmechanik 18 gesprüht werden. Die Düsen können auch am zweiten Lager- und Führungsmodul 12 befestigt sein. Die Koppelmechanik 18 weist an der Seite zum äußeren Drehteil 14 hin axiale Schmierstoffführungsschlitze auf, die es gestatten, den Schmierstoff an die Lagerstellen zu führen.

Bei dem stufenlosen Getriebe 10 stellt die Betriebsdrehzahl und die damit verbundene Leistungsfähigkeit des inneren oder äußeren Drehteils 13, 14 als Schwingungserzeuger eine wichtige Säule dar. Es besteht die Möglichkeit, den Schwingungserzeuger mit einem Vielfachen der Eingangsdrehzahl anzutreiben und entsprechend mit derselben Übersetzung Ü die Abtriebsdrehzahl herunter zu übersetzen. Beispielsweise gilt 1:3 Antrieb; 3:1 Abtrieb.

Da die Koppelmechanik 18 bezogen auf die Eingangsdrehzahl öfters drehen bzw. schalten muss, sinkt pro Schaltimpuls das Übertragungsdrehmoment. Das heißt, die Koppelsysteme schalten öfters mit entsprechend der Übersetzung niedrigeren Drehmomenten. Somit sollten möglichst hochdrehzahlfeste Schwingungserzeuger bereitstehen, die möglichst keine rotatorischen Unwuchten aufweisen. Die weiteren Ausführungsbeispiele zeigen hierfür spezielle weitere Ausgestaltungen.

Es ist außerdem anzumerken, dass bezogen auf den Phasenwinkel der Eingangsdrehzahl entsprechend der Eingangsübersetzung ein Impuls erzeugt wird, das heißt z.B. der Schwingungserzeuger weist sechs Koppelmechaniken 18 auf, die an dem äußeren Drehteil 14 um jeweils 60° versetzt angeordnet sind. Das bedeutet bei einer Eingangsübersetzung von 1:3 erfolgt alle 20° bezogen auf den Phasenwinkel der Eingangsdrehzahl ein Impuls. Wenn man davon ausgeht, dass bei dem Getriebe 10 bei einer Übersetzung Ü = 1:1 die Antriebsdrehzahl gleich der Abtriebsdrehzahl ist, so muss die Eingangsübersetzung wieder nach dem Schwingungserzeuger rückgängig gemacht werden also 3:1. Dies bedeutet ausgehend von dem zuvor genannten Beispiel mit sechs Koppelmechaniken 18, dass am Getriebeausgang alle 60° ein Impuls erfolgt, nur mit dem Unterschied, dass der Schwingungserzeuger die zu übertragende Energie dreimal öfters geschaltet hatte, einhergehend mit einen entsprechenden niedrigerem Kopplungsdrehmoment. Mit dieser Methode kann der Übersetzungsbereich vergrößert und die Schaltdrehmomente der Kopplungssysteme reduziert werden.

Bei einem stufenlosen Getriebe 10 mit nachgeschaltetem Differenzial und Nulldurchgang wirken sich die Vorteile besonders aus. Die Erweiterung dieser Eigenschaften stellt die Verschaltung eines Schwingungserzeugers mit einem Differenzialgetriebe dar. Realisiert man die Anordnung mit einem Planetenradgetriebe, welches 20 Zähne am Sonnenrad und 100 Zähne am Hohlrad aufweist, so kann man das Sonnenrad mit dem Abtrieb des Schwingungserzeugers verbinden, der fünfmal höher als die Eingangsdrehzahl dreht, wobei das Hohlrad einmal entgegengesetzt zur Eingangsdrehzahl dreht. Wird das Hohlrad an der Außenverzahnung angetrieben, so wird ein zusätzliches Zahnrad benötigt. Wird das Hohlrad innen angetrieben, so entfällt dieses Zahnrad. Wird die Anordnung bei Ü= 0 des Schwingungserzeugers in Betrieb gesetzt, so dreht das Sonnenrad fünfmal und das Hohlrad einmal entgegengesetzt. Die Folge ist, dass der Planetenradsatz steht, welcher den Getriebeabtrieb darstellt. Geht man von dem zuvor genannten Beispiel aus, sechs Koppelmechaniken 18 einzusetzen, so dividiert sich der Impulsphasenwinkel hier 60° durch den Faktor der Leistungsverzweigung hier Faktor 5. Daraus ergibt sich 60° geteilt durch 5 gleich 12°. Da die Bezugsebene Null ist, ist zum einen die Impulsanzahl und Übersetzung vom Verzweigungsverhältnis des Planetenradgetriebes abhängig und zum anderen davon abhängig, wie hoch das stufenlose Getriebe 10 bezogen auf die Drehzahl einer nicht dargestellten Antriebsmaschine übersetzt ist.

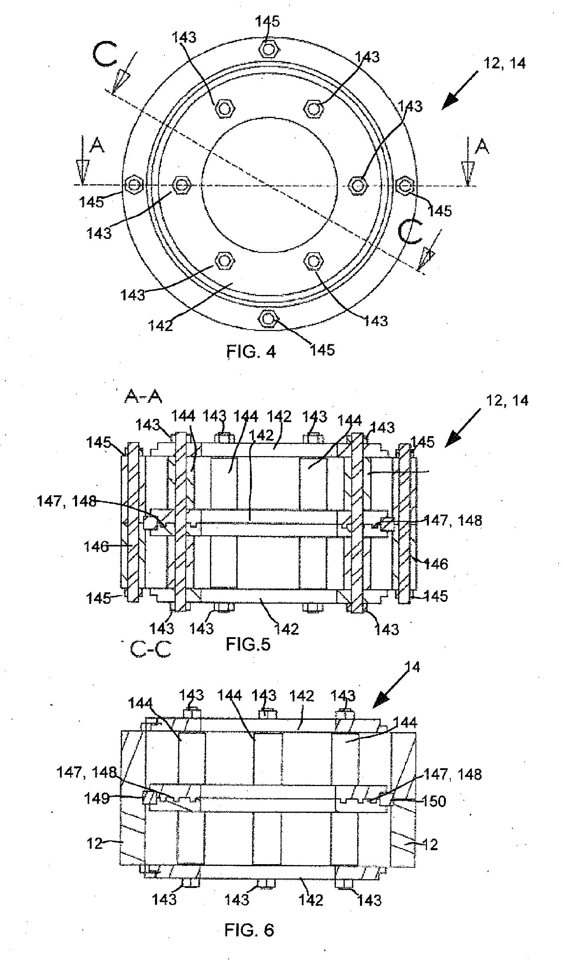

Gemäß einem zweiten Ausführungsbeispiel ist das äußere Drehteil 14 abgeändert, wie in Fig. 4 bis Fig. 6 dargestellt und nachfolgend beschrieben. Ansonsten ist das stufenlose Getriebe 10 aufgebaut, wie bei dem ersten Ausführungsbeispiel.

Bei dem vorliegenden Ausführungsbeispiel sind für das äußere Drehteil 14 Scheiben 142, die insbesondere kreisringförmig ausgestaltet sind, mittels Befestigungselementen 143, wie Schrauben, Stäbe und Muttern, usw., an Lagerbolzen 144 befestigt. Die Befestigungselemente 143 sind an den Enden der Lagerbolzen 144 angeordnet. Eine der Scheiben 142 kann Öffnungen, die andere Gewindeöffnungen aufweisen. Die Anzahl der Scheiben 142 wird durch die Anzahl der durch die Stege 141 gebildeten Kammern bestimmt. Zudem sind in Bezug auf das zweite Lager- und Führungsmodul 12 Befestigungselemente 145, wie Schrauben, Stäbe und Muttern, usw., und Lagerbolzen 146 vorgesehen. Somit sind in Fig. 4 bis Fig. 6 als Befestigungselemente 143, 145 jeweils ein Stab mit Gewinde an seinem beiden Enden mit Muttern verschraubt. Alternativ kann der Stab auch nur an einem seiner beiden Enden mit einem Gewinde versehen sein. Der Stab ist in einem hohlzylindrischen Drehteil, dem Lagerbolzen 144 oder dem Lagerbolzen 146, angeordnet. Der Lagerbolzen 144 dient als Lager des äußeren Teils der Koppelmechanik 18, welcher Teil nachfolgend auch als äußeres Koppelmodul bezeichnet ist. Der Lagerbolzen 146 dient als Lager des zweiten Lager-und Führungsmoduls 12. In Fig. 6 ist außerdem eine Lagerung mit einem Bezugszeichen 149 versehen.

Bei dieser Ausführung des äußeren Drehteils 14 ist es Zweck, beide Kreisringscheiben 142 derart zu verbinden, so dass sie sich nicht gegeneinander verschieben können. Diese Bauweise, die auch als Druckspannbauweise bezeichnet werden kann, erhöht maßgeblich die Verwindungs- und Biegefestigkeit beider Bauteile, so dass sie die Festigkeit erhalten, als wäre es ein einstückiges Bauteil, das insbesondere kreisringförmig ist. Diese Bauweise ist bei dem stufenlosen Getriebe 10 generell einsetzbar, also für alle konzentrischen Teile des stufenlosen Getriebes 10.

Durch die fehlende Mantelebene sind die Lagerbolzen 144, 146 gegen Durchbiegung besser ausgestattet, In Torsionsrichtung des äußeren Drehteils 14 kann eine höhere Instabilität entstehen, der man beispielsweise mit jeweils zwei gegenüberliegenden Kreuzstäben begegnen kann.

Wie in Fig. 5 zudem gezeigt, sind zwei Scheiben 142 in der Mitte des äußeren Drehteils 14 miteinander mit Hilfe einer Verzahnung 147, 148 verzahnt, die aus einer Auskragung 147 und einer Nut 148 gebildet ist, die beispielsweise umlaufend an der Scheibe 142 ausgestaltet sind. Die Verzahnung 147, 148 kann auch trapezförmig oder wellenförmig sein.

Eine weitere Maßnahme Torsionssteifigkeit zu erhalten ist, wenn neben den Lagerbolzen 144 zusätzliche Elemente nach dem Rohr/Stabprinzip eingesetzt und entsprechend verspannt sind. Um den Kreisringscheiben 142 höchste Stabilität bei möglichst geringem Gewicht zu geben, können Prägemuster/Linien usw. flächig eingepresst sein.

Zudem sollte die Lagerung des äußeren Dreteils 14 nur so groß sein, dass das Verschwenken oder Verstellen des zweiten Lager- und Führungsmoduls 12 möglich ist und ein kreisringförmiges Anschlußsegment für ein Abtriebszahnrad realisiert werden kann.

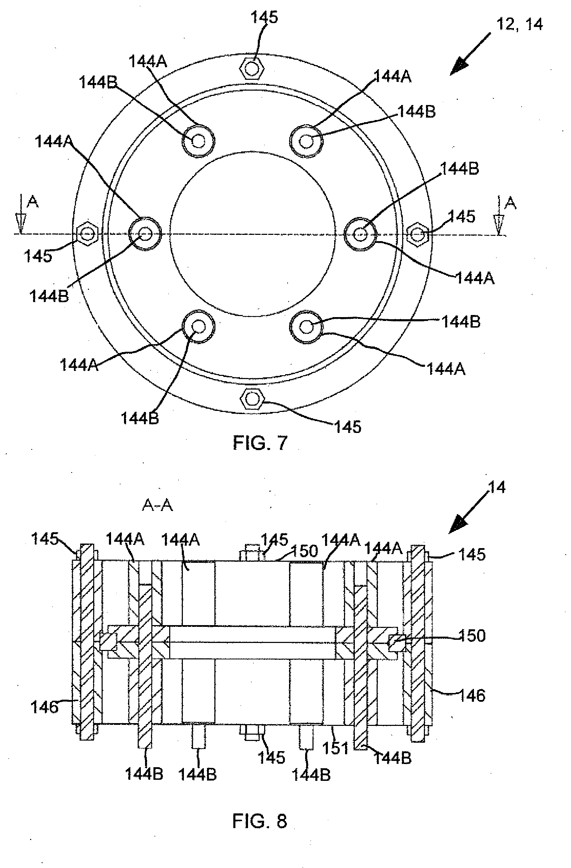

Darüber hinaus kann der von dem äußeren Drehteil 14 gebildete Zylinder an seiner Mantelfläche zur Gewichtsreduzierung Löcher aufweisen, so dass eine Art Gitterstruktur entsteht. Damit wird eine extrem hohe Torsions-/Biegefestigkeit bei geringem Bauteilgewicht erreicht. Gemäß einem dritten Ausführungsbeispiel ist das äußere Drehteil 14 abgeändert, wie in Fig. 7 und Fig. 8 dargestellt und nachfolgend beschrieben. Ansonsten ist das stufenlose Getriebe 10 aufgebaut, wie bei dem zweiten Ausführungsbeispiel.

Bei dem vorliegenden Ausführungsbeispiel sind anstelle der Scheiben 142 von Fig. 4 bis Fig. 6 zwei Hülsen 150, 151 aneinander befestigt. Insbesondere sind die zwei Hülsen 159, 151 gegeneinander verschraubt. Es sind jedoch auch andere geeignete Befestigungsarten denkbar.

Zudem ist bei dem vorliegenden Ausführungsbeispiel bei dem äußeren Drehteil 14 mindestens ein Teil der Lagerbolzen 144 von Fig. 5 und Fig. 6 aus zwei Teilen nämlich Rohr 144A und Stab 144B gebildet werden. Das Rohr 144A und der Stab 144B sind in Fig. 7 und Fig. 8 derart gegeneinander mit den Hülsen 150, 151 verspannt, dass höchste Festigkeit erzielt wird, wie bereits zuvor in Bezug auf Fig. 4 bis Fig. 6 genannt. Die Durchbiegung der Lagerbolzen 144 wird stark minimiert. Somit kann der Lagerbolzen 144 zum einen aus einem Rohr 144A, welches die Lagerstelle bildet, zum anderen aus einem Stab 144B mit Gewinde und Kopf gefertigt sein. Die Länge eines der Rohre 144A definiert den Abstand der Hülsen 150, 151 und somit die Größe des äußeren Drehteils 14. Steckt man durch das Loch des Rohres 144A und der einen Hülse 151 beispielsweise eine Schraube als Stab 144B derart, dass sie am anderen Ende des Rohres 144A mit ihrem Gewinde in das Gewindeloch der anderen Hülse 150 ragt, so kann man das Rohr 144A mit den Hülsen 150, 151 hochfest verschrauben, das heißt das Rohr 144A wird auf Druck beansprucht die Schraube als Stab 144B auf Zug. Es handelt sich hierbei um eine Spannkonstruktion, die hohe Stabilität verspricht und in der Herstellung sehr günstig ist. Die Lagerstelle, also das Rohr 144A, wäre durch den Spannverbund wirksam gegen ungewolltes Verdrehen gesichert.
Dies beschriebene Rohr/Stabbefestigung kann nicht nur in Bezug auf die Hülsen 150, 151 sondern auch bei den Scheiben 142 von Fig. 4 bis Fig. 6 zum Einsatz kommen.

Gemäß einem vierten Ausführungsbeispiel erstrecken sich die kreisringförmigen Stege 141 nach außen über die Mantelebene des äußeren Drehteils 14 hinaus. Hierbei können die Lagerbolzen 144 für das äußere Drehteil 14 wie bisher angeordnet sein, aber auch an der Außenseite des äußeren Drehteils 14. In diesem Fall ist die Mantelebene des äußeren Drehteils 14 an den entsprechenden Stellen durchbrochen, um Raum für die Koppelmechaniken 18 zu schaffen. Die Lagerbolzen 144 müssen gegen ungewolltes Verdrehen gesichert sein, damit sichergestellt wird, dass die Lagerpaarung der Koppelmechanik 18 angesprochen ist. Ansonsten ist das stufenlose Getriebe 10 aufgebaut, wie bei dem ersten Ausführungsbeispiel.

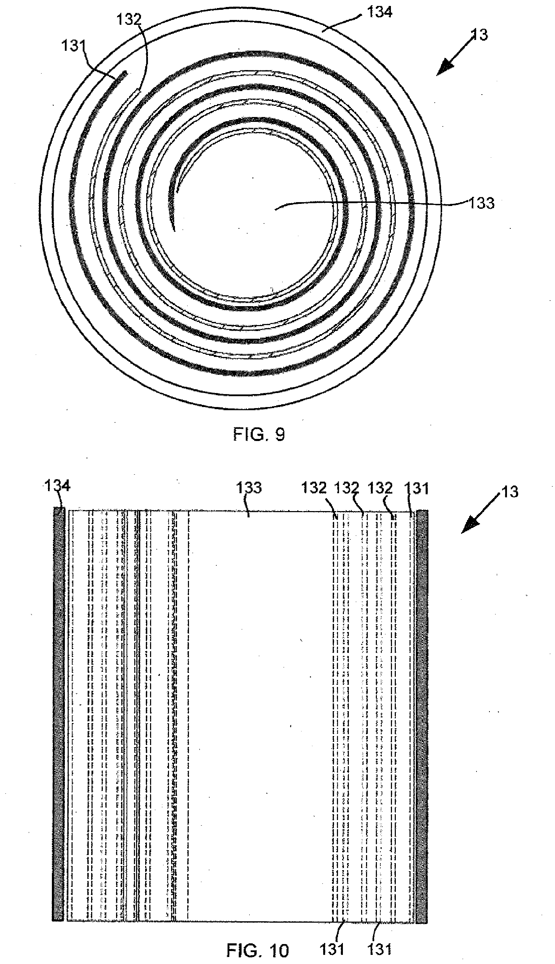

Wie in Fig. 9 und Fig. 10 in einem Quer- und Längsschnitt gezeigt, ist das innere Drehteil 13 gemäß einem fünften Ausführungsbeispiel aus einem oder mehreren Blechen 131, 132 in Wickelbauweise mit Hochleistungsklebstoffen und gegebenenfalls mit Zugspannung hergestellt. Somit bildet sich in der Mitte des inneren Drehteils 13 ein Hohlraum 133. Die Wickelbauweise kann auch in Verbundtechnologie mit unterschiedlichen Materialien Stahl/Carbon laminiert werden. Über diese Verbundbauweise kann ein abschließendes Rohr 134 geschoben und verklebt werden, um den später beschriebenen Klemmkörpern /Lagern für die Koppelmechanik 18 eine geeignete Oberfläche zu geben.

Gemäß Fig. 9 bildet die Verbundkonstruktion in Spiralbauweise ein wellenförmiges Teil als das innere Drehteil 13. In Fig. 9 ist die Spirale zur besseren Veranschaulichung als offene Spirale gezeigt, da zwischen den Blechen 131, 132 jeweils ein Zwischenraum vorhanden ist. In der Realität ist bei dem inneren Drehteil 13 jedoch Lage an Lage der Bleche 131, 132 gewickelt, so dass kein Zwischenraum zwischen den Blechen 131, 132 vorhanden ist.

Somit wird hier eine Alternative zur Herstellung von Teilen aus Stahl mittels Fräs-Drehtechnik vorgestellt, wobei eine Bauweise mit Verbundwerkstoffen bzw. deren Laminiertechnik beschrieben ist. Beispielsweise können Stahlbleche zur Verwendung kommen, die quer zur Winkelrichtung geriffelt oder gewellt sind. Hierbei können die Bleche 131, 132 in Wickelrichtung mit einer bestimmten Zugspannung beaufschlagt werden.

Zudem kann während des Wickelvorganges ein flüssiger Laminierklebstoff zwischen den Schichten eingebracht werden. Man kann auch die verschiedensten Materialien Glas/Karbonfasern mit einlaminieren. Ist der Wickelvorgang abgeschlossen und das Laminat abgebunden, kann die Vorspannung der Wickeltechnik aufgehoben werden und der Rohling in ein Stahlrohr mit Laminierharz eingeschoben werden, abbinden lassen und dann in einem Ofen auf Endfestigkeit gebacken werden. Das Rohr 134 hätte hier die Aufgabe z.B. für das innere Drehteil 13 eine hochvergütete Lauffläche für die Kupplungen eines nachfolgend beschriebenen inneren Koppelmoduls zu bilden. Vorteil dieser Technik ist die vergleichbare Festigkeit der Bauelemente bei höherer Elastizität und einem niedrigeren spezifischen Gewicht als zum Beispiel hochlegierter Stahl zu gewährleisten.

Die Koppelmechanik 18 kann auf dem inneren Drehteil 13 axial geführt sein oder zwischen den Lagerschilden des Gehäuses 19. Demzufolge liegen sämtliche Koppelmechaniken 18 an ihrem Ende zum inneren Drehteil 13 axial an ihrem Nachbarn an, so dass nur die am weitesten entfernten Koppelmechaniken 18 an ihrem Ende zum inneren Drehteil 13 axial geführt werden müssen. An ihrem Ende zum äußeren Drehteil 14 müssen die Koppelmechaniken 18 in der Lagerung im äußeren Drehteil 14 nicht axial geführt sein. Jedoch können die Koppelmechaniken 18 in der Lagerung im äußeren Drehteil 14 axial geführt sein.

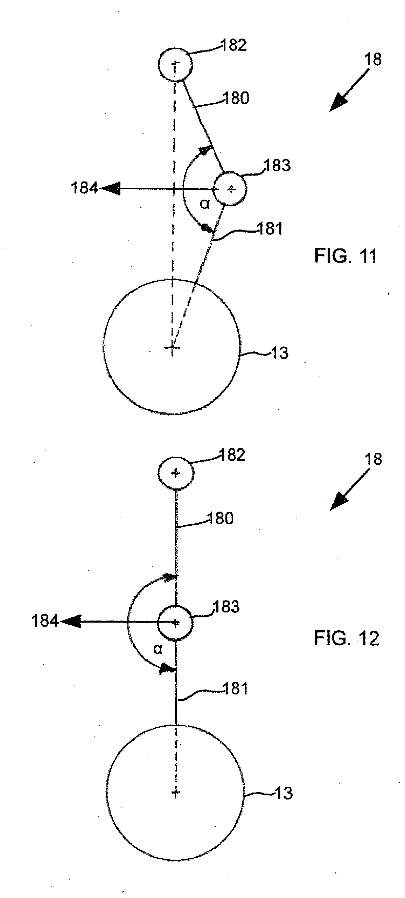

Fig. 11 und Fig. 12 zeigen schematisch den Aufbau der Koppelmechaniken 18 gemäß einem sechsten Ausführungsbeispiel. Die Koppelmechanik 18 umfasst ein äußeres Koppelmodul 180, ein inneres Koppelmodul 181, ein äußeres Lager 182 für das äußere Koppelmodul 180, und ein Lager 183, das als inneres Lager für das äußere Koppelmodul 180 und als äußeres Lager für das innere Koppelmodul 181 dient. Das äußere und innere Koppelmodul 180, 181 sind um einen Winkel α gegeneinander verschwenkbar, wie durch einen Drehpfeil dargestellt. Hierbei ist die Koppelmechanik 18 so ausgestaltet, dass für den Winkel α < 180° gilt, wie in Fig. 11 gezeigt. Dadurch kann die Koppelmechanik 18 nicht in Richtung eines Pfeils 184 in den Zustand umklappen, der in Fig. 12 dargestellt ist. Hierbei zeigt Fig. 11 den Zustand maximaler Exzentrizität der Koppelmechanik 18. Demgegenüber ist der Zustand von Fig. 12 ein unzulässiger Zustand.

Um eine solche Koppelmechanik 18 zu erreichen, kann gemäß einer ersten Variante die Exzentrizität der Koppelmechanik 18 mit der Verstelleinrichtung, gemäß dem Verstellelement 15 und/oder Verstellantriebeinrichtung 20, oder zwischen Gehäuse 19 und zweitem Lager-und Führungsmodul 12 mit "Anschlägen" begrenzt sein. Alternativ oder zusätzlich können gemäß einer zweiten Variante auch in den Gelenkachsen von mindestens einem der äußeren und inneren Lager 182, 183, 184, 185 Anschläge der Koppelmechanik 18 gebildet sein. Jedoch ist die erstere Variante bevorzugt, da sich bei der zweiten Variante ein undefinierter Betriebszustand bilden kann. Möglichkeiten der Gelenkanschläge der inneren und äußeren Koppelmodule 181, 180 sind:
- äußeres Koppelmodul 180 durch Gelenkachse oder Lager 182 schlägt an äußerem Drehteil 14 an,
- inneres und äußeres Koppelmodul 181, 180, weisen in der Nähe der Gelenkachse oder Lager 183 Anschläge derart auf, dass der Winkel α in Fig. 11 nicht größer werden kann. Zusätzlich ist eine Kombination der zuvor genannten Möglichkeiten für die Gelenkanschläge möglich.

Wie zuvor beschrieben, sind die Koppelmechaniken 18 über Klemmkörper an den Drehteilen 13, 14 angeordnet. Die Klemmkörper können vollständig aus Hartmetall z.B. Wolfram, Siliziumkarbit, usw. gefertigt sein.

Zudem kann eine Kupplung der Koppelmechaniken 18 als Scheibenbremse ausgebildet sein, die extern angesteuert werden kann, die Implementierung einer zusätzlichen Koppelmechanik 18 pro Kopplungseinheit ermöglicht eine aus der Kinematik sich ergebende Zwangssteuerung der Bremseinrichtung. Die Steuerung, wie Öffnen und Schließen der Bremse, muss voreilend zu der betreffenden Koppelmechanik 18 erfolgen.

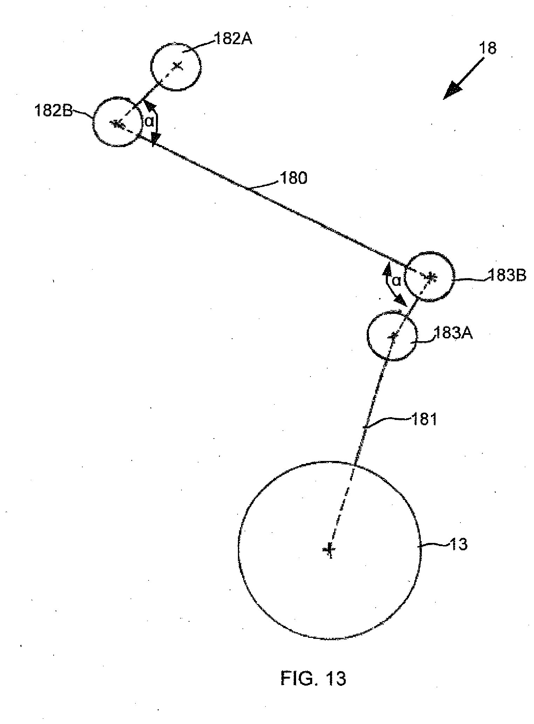

Fig. 13 zeigt schematisch den Aufbau der Koppelmechaniken 18 gemäß einem siebenten Ausführungsbeispiel. Hier umfasst die Koppelmechanik 18 gekröpfte Lagerbolzen 182A, 182B und 183A, 183B. Demzufolge umfasst das äußere Lager 182 für das äußere Koppelmodul 180 die zwei Teile 182A, 182B, das andere Lager 183, das als inneres Lager 184 für das äußere Koppelmodul 180 und als äußeres Lager 185 für das innere Koppelmodul 181 dient, umfasst die zwei Teile 183A, 183B. Daher bewegen sich die inneren und äußeren Koppelmodule 181, 180 nicht um einen Drehpunkt, wie in Fig. 11 und Fig. 12, sondern um zwei Drehpunkte. Hierbei ist der Winkel α bei den Teilen182B, 183B jeweils konstant. Auch dadurch kann die Koppelmechanik 18 nicht in einen unzulässigen Zustand umklappen. Sinn und Zweck der in Fig. 13 dargestellten Koppelmechanik 18 ist es, die Sinusfunktion einer Bewegung einer Koppelmechanik 18 derart zu verformen, dass man sich dem Ideal einer Rechteckfunktion annähert, mit dem Ziel, die Drehbewegung am Abtrieb gleichförmig zu erhalten.

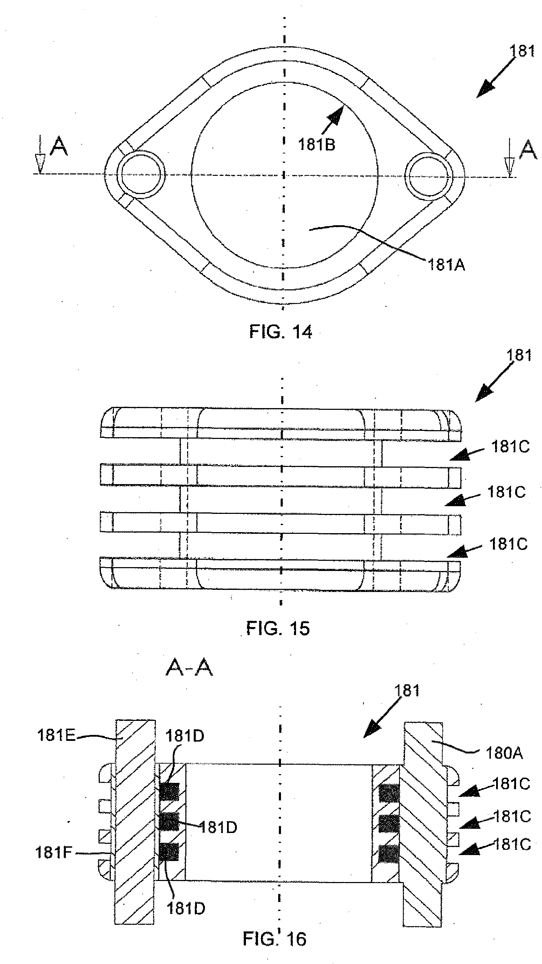

Fig. 14 und Fig. 15 zeigen zwei Ansichten eines inneren Koppelungsmoduls 181 in Leichtbauweise gemäß einem achten Ausführungsbeispiel. Wie in Fig. 14 veranschaulicht, hat das innere Koppelungsmodul 181 die Form einer Doppelnocke. Das innere Koppelungsmodul 181 ist symmetrisch zur strichpunktierten Mittellinie ausgestaltet. An einer innenliegenden Öffnung 181A hat das innere Koppelungsmodul 181 eine Lauffläche 181B für einen Klemmkörpersatz bzw. eine Lagerung.

Fig. 15 zeigt in einer Seitenansicht, dass das innere Koppelungsmodul 181 kein Massivteil ist, sondern mehrere Schlitze 181C aufweist. Die Schlitze 181C können beispielsweise dadurch hergestellt werden, indem das innere Koppelungsmodul 181 entsprechend radial zur inneren Öffnung mehrfach eingedreht wird. Das innere Koppelungsmodul 181 kann auch scheibenweise aufgebaut sein, um die Schlitze 181C herzustellen.

Wie in Fig. 16 in einem Schnitt A-A von Fig. 14 gezeigt, können in die Schlitze 181C Carbonfasern 181D mit Vorspannung laminierend aufgewickelt werden. Die Carbonfasern sind jedoch nicht zwingend vorzusehen. Zudem kann ein Masseausgleichsbolzen 180A an dem inneren Koppelungsmodul 181 vorgesehen sein, welcher die Masse eines Lagerbolzens 181E des äußeren Koppelmoduls 180 ausgleichen kann. Dadurch ist die Masse auf beiden Seiten der strichpunktierten Mittellinie in Fig. 16 genau gleich. Der Lagerbolzen 181E gehört gravimetrisch zum inneren Koppelmodul 181 und ist in einer Lagerhülse 181F geführt. Der gegenüberliegende Masseausgleichsbolzen 180A stellt über die Symmetrieebene das exakte Gegengewicht dar.

Insgesamt ergibt sich durch die in Fig. 15 und auch Fig. 16 gezeigten Maßnahmen bei dem vorliegenden Ausführungsbeispiel eine deutliche Gewichtsreduzierung des inneren Koppelungsmoduls 181 gegenüber einem massiven Bauteil. Darüber hinaus kann das innere Koppelungsmodul 181 durch den Masseausgleichsbolzen 180A sehr vorteilhaft ausgewuchtet werden.

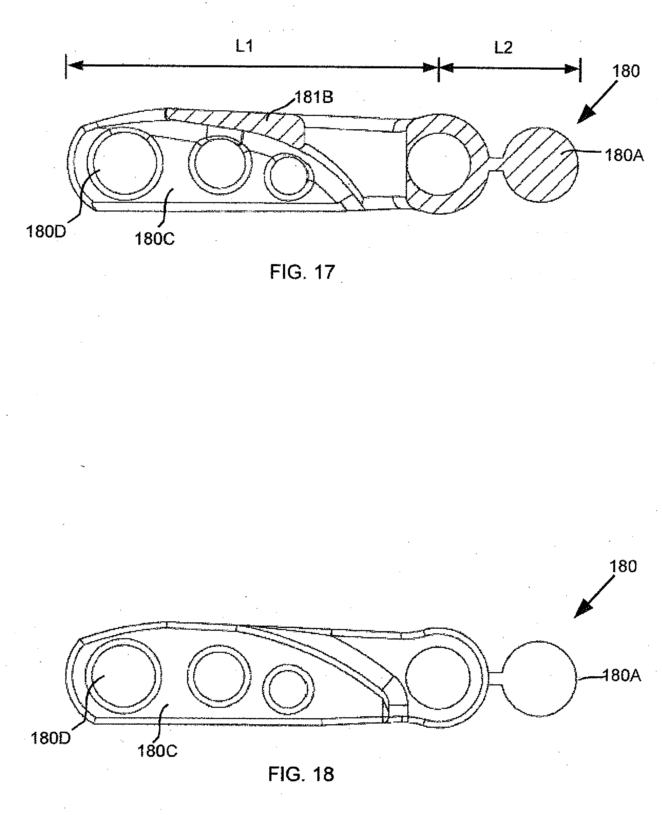

Zudem kann gemäß diesem Ausführungsbeispiel das äußere Koppelungsmodul 180 aufgebaut sein, wie in Fig. 17 in einer Schnittansicht und in Fig. 18 in einer Seitenansicht veranschaulicht. Das äußere Koppelungsmodul 180 wird mit dem Lagerbolzen 181E des inneren Koppelungsmoduls 181 über Öffnungen 180D des äußeren Koppelmoduls 180 dreh/schwenkbar, ähnlich einem Kniegelenk, mit dem inneren Koppelmodul 181 verbunden, wie auch aus Fig. 16 hervorgeht. Das äußere Koppelungsmodul 180 ist so aufgebaut, dass sein Gewicht in dem Bereich L1 gleich seinem Gewicht in dem Bereich L2 ist. Die Linie zwischen L1 und L2 geht vorzugsweise exakt durch den Lagermittelpunkt. Zudem verbindet bei dem äußeren Koppelungsmodul 180 ein Mittelsteg 180B zwei Arme 180C, die das äußere Koppelungsmodul 180 an zwei gegenüberliegenden Seiten begrenzen. Profile des äußeren Koppelmoduls 180, wie beispielsweise sein Mittelsteg 180B und/oder sein(e) Arm(e) 180C, können beispielsweise auch rohrförmig, doppel-T-förmig, usw. sein.

Somit ist auch das äußere Koppelungsmodul 180 durch die beschriebene Masseverteilung sehr vorteilhaft ausgewuchtet.

Mit dem zuvor beschriebenen äußeren und inneren Koppelmodul 180, 181 kann ein vollständiger Massenausgleich des inneren und äußeren Koppelmoduls gewährleistet werden. Dadurch können die sich drehenden koppelnden Funktionselemente die hohen Drehzahlen leisten, die für das stufenlose Getriebe 10 gefordert werden.

Das äußere Koppelungsmodul 180 kann in Tiefzieh- und/oder Blechpresstechnik hergestellt werden. Sind keine Kammern durch Kreisringe im äußeren Drehteil 14 gebildet, ist das äußere Koppelungsmodul 180 deswegen nicht verjüngt, es weist dann in der Draufsicht eine rechteckige Grundform auf.

Bei dem äußeren Koppelungsmodul 180 können in den Wangen bzw. Armen 180C Ölzulaufbohrungen radial in um einer Lagerbohrung 180D Aussparungen, wie insbesondere Nuten, usw., vorgesehen sein, welche die Schmierstoffzufuhr an die Lagerstellen des Bolzens 181E des inneren Koppelmoduls 181 realisieren. Es können zudem radiale Öffnungen, insbesondere durch Bohrungen, in der Lagerhülse 181F des Lagerbolzens 181E des inneren Koppelmoduls 181 angeordnet sein. Das äußere Koppelungsmodul 180 kann axial statt in einer Kammer des äußeren Drehteils 14 auch am Lagerbolzen 29 (Fig. 3) selbst geführt sein. Am inneren Drehteil 13 wird nicht zwingend eine axiale Führung der inneren Koppelmodule 181 benötigt.

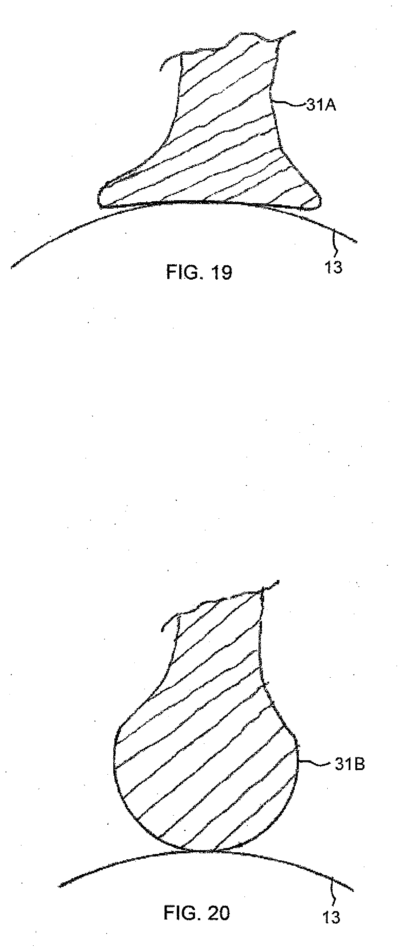

Da auch die Kupplungselemente (Klemmkörper) fähig sein müssen, die Energie zu übertragen, geben Fig. 19 bis Fig. 22 hierfür vorteilhafte Ausführungsvarianten an.

Fig. 19 zeigt einen unteren Fußbereich eines Klemmkörperelements 31A aufliegend auf dem inneren Drehteil 13. Der untere Fußbereich des Klemmkörperelements 31A ist konkav geformt, wohingegen das innere Drehteil 13 konvex geformt ist. Hierbei gilt, dass der Radius der konkaven Wölbung des unteren Fußbereichs des Klemmkörperelements 31 größer als der Radius der konvexen Wölbung des inneren Drehteils 13 ist.

Bei der Ausführungsvariante von Fig. 20 hingegen ist der untere Fußbereich eines Klemmkörperelements 31B kugelig geformt. Hier sind also der untere Fußbereich des Klemmkörperelements 31B und das innere Drehteil 13 konvex geformt. Somit liegt bei dieser Ausführungsvariante nur eine schwache Linienberührung von dem unterem Fußbereich des Klemmkörperelements 31B und dem inneren Drehteil 13 vor. Daher ist bei der Ausführungsvariante von Fig. 20 die Kontaktfläche von Klemmkörperelement 31B und innerem Drehteil 13 mit einem höheren Verschleiß behaftet als bei der Ausführungsvariante von Fig. 19.

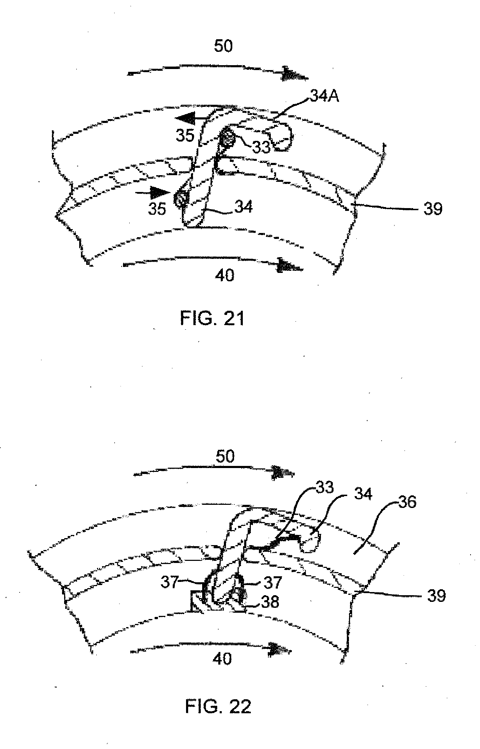

Bei Fig. 21 und Fig. 22 wird das Erreichen der hohen Drehzahlen durch Einzelanfederung der Klemmkörperelemente 34 erreicht. Zusätzlich oder alternativ kann das Erreichen der hohen Drehzahlen durch Zentrifugalkraft oder Fliehkraft bedingtes, beispielsweise durch Klemmkörpergeometrie, Schwerpunkt, Anpressen in einem Ringspalt erreicht werden, wie in Fig. 21 und Fig. 22 veranschaulicht. Zudem sollten, wie bereits zuvor erwähnt, das innere und äußere Koppelmodul 181, 180, sowie das äußere Drehteil 14 möglichst leicht und fest sein.

Fig. 21 zeigt eine Feder 33, welche einen Klemmkörper 34 mit einem Schenkel 34A in Richtung der Pfeile 35 drückt. Die Feder 33, welche den Klemmkörper 34 in die gewünschte Position drückt, kann sich an einem Käfig 39 abstützen, welcher den Klemmkörper 34 aufnimmt. Dadurch wird der Klemmkörper 34 in einen Ringspalt 36 zwischen beispielsweise dem inneren Drehteil 13 und dem inneren Koppelungsmodul 181 gedrückt. Bei Kraftübertragung entsteht über die Senkwirkung die Kraftübertragung. Die Ausladung des Schenkels 34A führt dazu, dass die Zentrifugalkraft, zusätzlich zur Kraft der Feder 33, den Klemmkörper 34 in den Ringspalt 36 presst. In Fig. 21 ist außerdem die Anordnung des Klemmkörpers 34 in Bezug auf die Antriebsrichtung 40 und die Abtriebsrichtung 50 gezeigt.

In Fig. 22 ist ein Ende des Klemmkörpers 34 mit Halteelementen 37 in einem Klemmkörperschuh 38 angeordnet. Die Feder 33 ist hier S-förmig ausgeformt. Mit dieser Variante kann die Oberfläche des Klemmkörpers 34 vergrößert werden, um den Verschleiß zu reduzieren. Das Ende des Klemmkörpers 34 am Klemmkörperschuh 38 hat entweder einen Radius kleiner oder gleich dem Radius der entsprechenden Aufnahme für das Ende des Klemmkörpers 34 im Klemmkörperschuh 38.

Da das äußere Koppelmodul 180 des stufenlosen Getriebes 10 dreidimensionale Bewegungen ausführen kann, sind die Funktionskomponenten zur radialen Lagerung auch axial zu lagern. Nachfolgend sind mehrere Möglichkeiten hierfür beschrieben.

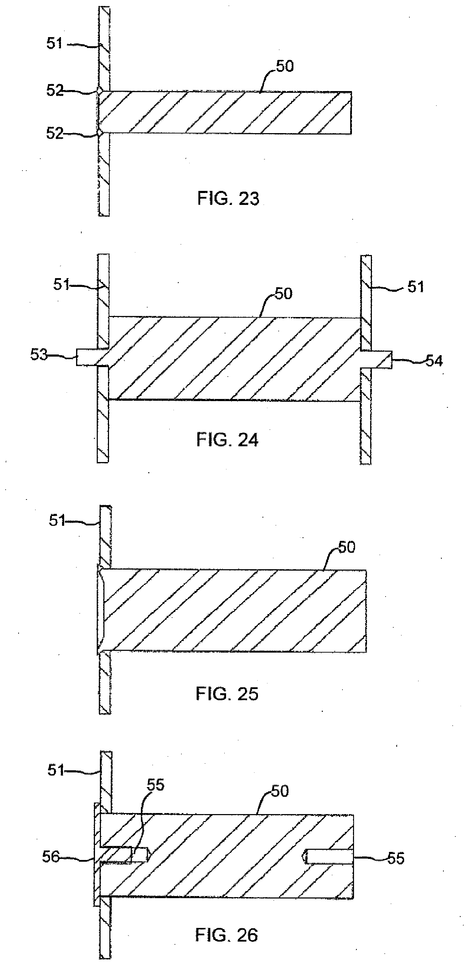

Fig. 23 bis Fig. 26 zeigen jeweils verschiedene Varianten für eine Axialsicherung eines Bolzens oder einer Welle 50 an einem plattenförmigen Element 51, wie beispielsweise einer Scheibe 142. Eine solche Axialsicherung kann beispielsweise für das die Lagerbolzen 180A und/oder auch für das innere Drehteil 13 usw. zum Einsatz kommen.

Gemäß der Variante von Fig. 23 sind die Welle 50 und die Scheibe 51 mittels einer Schweißverbindung 52, in Form von beispielsweise Schweißpunkten, einer Schweißnaht, usw., aneinander befestigt.

Gemäß der Variante von Fig. 24 hat die Welle 50 an ihrem einen Ende einen Stift 53 und an ihrem anderen Ende einen Stift 54. Die Stifte 53, 54 sind jeweils in eine Öffnung einer Scheibe 51 gedreht. Hierbei hat der Stift 53 ein Rechtgewinde. Der Stift 54 hat ein Linksgewinde.

Gemäß der Variante von Fig. 25 ist die Welle 50 in einer Öffnung der Scheibe 51 angeordnet und darin verpresst. Hierfür kann insbesondere der Umfang der Welle etwas größer als der Durchmesser der Öffnung der Scheibe 51 sein.

Gemäß der Variante von Fig. 26 hat die Welle 50 an ihren beiden Enden jeweils eine Öffnung 55. In die Öffnungen 55 kann jeweils eine Tellerschraube 56 eingeschraubt werden, wie auf der linken Seite in Fig. 26 gezeigt.

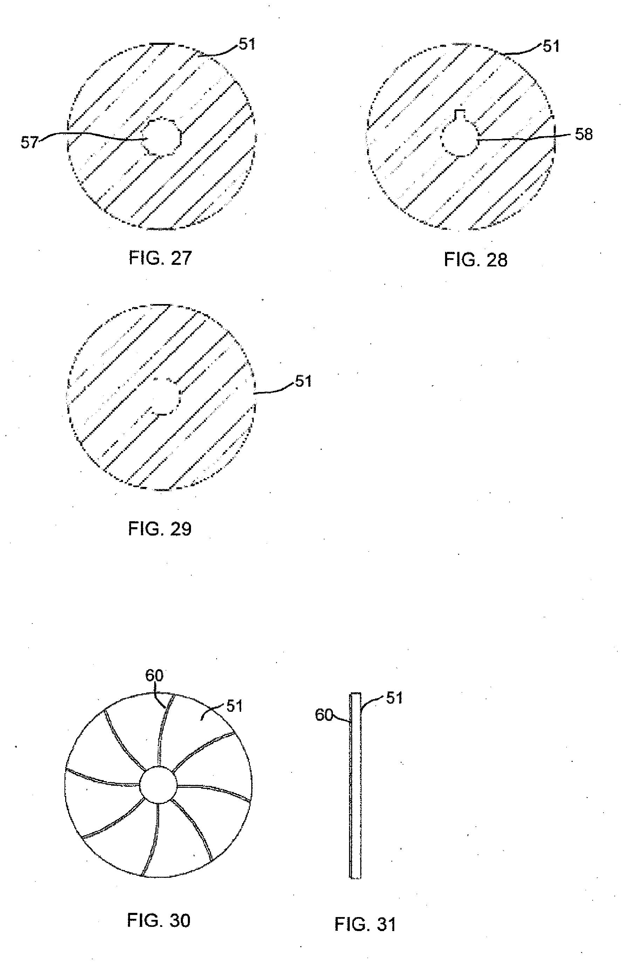

Fig. 27 bis Fig. 30 zeigen jeweils verschiedene Varianten für eine Sicherung gegen Verdrehen eines Bolzens oder einer Welle an einem plattenförmigen Element 51, wie beispielsweise einer Scheibe 142 (Fig.5 und Fig. 6). Eine solche radiale Verdrehsicherung kann beispielsweise für das innere Drehteil 13 oder die Lagerbolzen 180A usw. zum Einsatz kommen. Die radiale Verdrehsicherung kann mit der Axialsicherung gemäß Fig. 19 bis Fig. 22 kombiniert sein.

Gemäß der Variante von Fig. 27 ist in der Scheibe 51 eine Verzahnung 57 in einer Öffnung der Scheibe 51 vorgesehen. Ist die Welle entsprechend verzahnt, kann sie sich mit der Scheibe 51 verzahnen und so gegen ein Verdrehen gegenüber der Scheibe 51 gesichert werden.

Gemäß der Variante von Fig. 28 ist die Öffnung 58 passend für eine Keilwelle ausgestaltet.

Gemäß der Variante von Fig. 29 ist die Öffnung 59 abgeflacht, wobei die Welle entsprechend ausgestaltet ist.

Gemäß der Variante von Fig. 30 und Fig. 31 hat die Scheibe 51 an ihrer Oberfläche in radialer Richtung der Scheibe 51 axiale Erhebungen 60, die in Fig. 30 nicht alle mit Bezugszeichen versehen sind. Die Erhebungen 60 ragen um ein vorbestimmtes Maß aus der Scheibe aus, wie in Fig. 31 veranschaulicht.

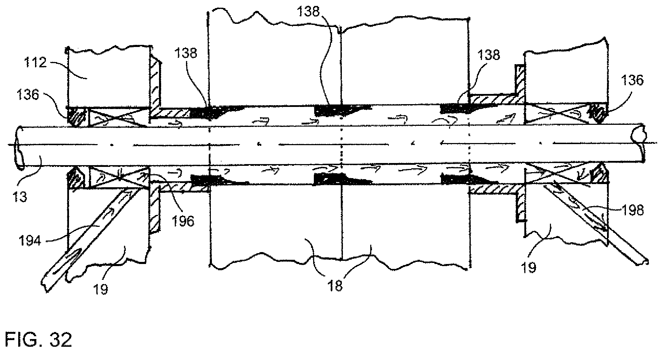

Fig. 32 zeigt eine bevorzugte Ausführungsform einer Schmierstoffversorgung des stufenlosen Getriebes 10. Diese sieht eine erzwungene Schmierstoffversorgung zwischen dem inneren Drehteil 13 und den Koppelmechaniken 18, besonders bevorzugt zwischen dem inneren Drehteil 13 und dem/den inneren Koppelmodul/en, mittels einer Pumpe vor. Dabei besteht ein Schmierstoffstrom in axialer Richtung entlang der Mantelfläche des inneren Drehteils 13. Dazu ist ein erster Führungskanal 194 innerhalb des Lager- und Führungsmoduls 11, bevorzugt innerhalb des Lagerschildes 112 des inneren Drehteils 13 zur Lagerstelle des inneren Drehteils vorgesehen, durch welche der Schmierstoff über eine erste Führungshülse 196, das heißt eine Schnittstelle des stationären Teils (wie das Gehäuse) zum drehbaren Teil (inneres Koppelmodul 181)auf die Mantelfläche des inneren Drehteils 13 eingebracht wird. Besonders bevorzugt ist dieser Bereich durch den Ringspalt von dem inneren Drehteil 13 und der Bohrung der Koppelmechanik 18, bevorzugt des inneren Koppelmoduls 181 gegeben. Der Schmierstoff wird nun in eine axiale Richtung entlang des inneren Drehteils 13 gefördert. Zwischen den in axialer Richtung des inneren Drehteils 13 hintereinander angeordneten Koppelmechaniken 18 kann vorteilhaft ein definierter Schmierstoffverlust gewollt sein, der bevorzugt die Axiallagerung und/oder die internen Maschinenelemente durch Fliehkraft mit Schmierstoff versorgt. Ferner sind bevorzugt ein zweiter Führungskanalinnerhalb des anderen Lager- und Führungsmoduls, bevorzugt innerhalb des anderen Lagerschildes des inneren Drehteils 13, sowie besonders bevorzugt eine zweite Führungshülse als Schnittstelle des stationären Teils zum drehbaren Teil vorgesehen, welche sich besonders bevorzugt verglichen mit dem ersten Führungskanal und der ersten Führungshülse am in axialer Richtung entgegengesetzten Ende des inneren Drehteils 13 befindet. Derzweite Führungskanal ist vorteilhaft dazu vorgesehen, dass der austretende Schmierstoff in dem entsprechenden Lager des Gehäuses strömen kann. Durch den zweiten Führungskanal 198 ist der Rücklauf des Schmierstoffs vorgesehen bzw. wird der Schmierstoff angesaugt. Der Schmierstoffstrom entlang der Mantelfläche des inneren Drehteils 13 ist an beiden Enden des inneren Drehteils 13 durch jeweils einen Wellendichtring 136 begrenzt. Bevorzugt ist somit ein Schmierstoffstrom lediglich in dem Bereich des inneren Drehteils 13 vorgesehen, der sich in dem Gehäuse 19 befindet.

Bevorzugt kann an der Axiallagerung einer Koppelmechanik 18 ein ringförmiger Steg umfassend angebracht sein, welcher in eine Nut einer benachbarten Koppelmechanik 18 hineinragt.

In einer besonders bevorzugten Ausführungsform der Schmierstoffversorgung des stufenlosen Getriebes 10 werden ineinander laufende, geringfügig beabstandete Ringe an den Koppelmechaniken 18 eingesetzt oder aber es sind Hydraulikdichtungen oder Gleitringdichtungen vorgesehen.

In einer weiteren bevorzugten Ausführungsform der Schmierstoffversorgung sind überlappende Dichtringe 138 zwischen jeweils zwei in axialer Richtung benachbarten Koppelmechaniken 18 vorgesehen, welche mögliche Zwischenräume zwischen den benachbarten Koppelmechaniken 18 gegenüber dem Schmierstoffstrom auf der Mantelfläche des inneren Drehteils 13 abdichten. Besonders bevorzugt verjüngt sich die Dicke dieser Dichtringe 138 in Richtung des Schmierstoffstroms.

Es sind auch beliebige Kombinationen zwischen der sogenannten dichten Schmierstoffversorgung, in der kein wesentlicher Schmierstoffverlust beispielsweise durch Austritt des Schmierstoffs zur Schmierung der internen Maschinenelemente und/oder der Koppelmechanik 18, auftritt, und einer Schmierstoffversorgung mit Schmierstoffverlust denkbar. Eine derartige Kombination könnte etwa in der Anordnung von Dichtringen 138 zwischen nur einigen Koppelmechaniken, nicht aber zwischen allen Koppelmechaniken bestehen.

Vorteilhaft sind durch die in diesen bevorzugten Ausführungsformen für die Schmierstoffversorgung keine stationär in die innen liegenden Maschinenelemente platzierte Düsen oder mitlaufende Düsen nötig. Es könnten jedoch auch stationäre Düsen stattdessen und/oder zusätzlich vorgesehen sein.
Vorteilhaft ist zudem in der Ansaugleitung der Pumpe, die für den Schmierstoffstrom der Schmierstoffversorgung sorgt, ein Feinfilterelement vorgesehen.

Außerdem sind bevorzugt je nach vertikaler oder horizontaler Ausrichtung des stufenlosen Getriebes, das heißt je nachdem ob die axiale Richtung des inneren Drehteils 13 vertikal oder horizontal bei der Inbetriebnahme des stufenlosen Getriebes ausgerichtet ist, entsprechend Bohrungen an dem Behältnis, in dem sich der Schmierstoff während des Betriebs der Pumpe besonders sammelt, für die Pumpe zum Ansaugen des Schmierstoffs vorgesehen. Die Bohrungen befinden sich bevorzugt dabei stets an der Schmierstoffleitung des unteren Teils des stufenlosen Getriebes, in der sich der Schmierstoff aufgrund der Schwerkraft sammelt.

Alle zuvor beschriebenen Ausgestaltungen des stufenlosen Getriebes 10 können einzeln oder in allen möglichen Kombinationen Verwendung finden. Insbesondere können die Merkmale der zuvor beschriebenen Ausführungsbeispiele beliebig kombiniert oder bei Bedarf weggelassen werden. Zusätzlich sind insbesondere folgende Modifikationen denkbar. Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Das innere Drehteil 13 kann als Antrieb oder Abtrieb Verwendung finden. Demzufolge kann auch das äußere Drehteil 14 als Abtrieb oder Antrieb Verwendung finden.

Für jedes Teil des stufenlosen Getriebes 10 besteht die Möglichkeit, alle Arten von Stählen, Beschichtungen, Hartmetallen, Verbundwerkstoffen, Kohle-Glasfasern usw. einzusetzen.

## Patentansprüche

1. Stufenloses Getriebe (10), mit einem äußeren Drehteil (14),
einem inneren Drehteil (13), das in dem äußeren Drehteil (14) derart angeordnet ist, dass das innere und/oder das äußere Drehteil (13, 14) relativ zueinander drehbar sind,
mehreren Koppelmechaniken (18) zur Kopplung des inneren und äußeren Drehteils (13, 14) miteinander,
einer Verstelleinrichtung zur exzentrischen Verstellung des inneren und äußeren Drehteils (13, 14) relativ zueinander,
**dadurch gekennzeichnet, dass**
das stufenlose Getriebe (10) eine Pumpe (30) zum Fördern eines Schmierstoffs in das Getriebe (10) in axialer Richtung entlang einer Mantelfläche des inneren Drehteils (13), und
Dichtelemente, die an dem inneren Drehteil (13) bei den Koppelmechaniken (18) angeordnet sind, oder Düsen zum Fördern einer vorbestimmten Menge an Schmierstoff an die jeweilige Koppelmechanik (18) aufweist.

2. Stufenloses Getriebe (10) nach Anspruch 1, zudem mit einem Gehäuse (19) zur Aufnahme des stufenlosen Getriebes (10), wobei die Pumpe (30) zum Fördern des Schmierstoffes in einem Kreislauf in das und aus dem Gehäuse (19) angeordnet ist.

3. Stufenloses Getriebe (10) nach Anspruch 1 oder 2, wobei das äußere Drehteil (14) Scheiben (142) aufweist, welche durch Lagerbolzen (144) für die Koppelmechaniken (18) beabstandet sind.

4. Stufenloses Getriebe (10) nach Anspruch 1 oder 2, wobei das äußere Drehteil (14) zwei aneinander befestigte Hülsen (150, 151) aufweist, welche durch Lagerbolzen (144) für die Koppelmechaniken (18) beabstandet sind.

5. Stufenloses Getriebe (10) nach einem der vorangehenden Ansprüche, wobei eine der Koppelmechaniken (18) aufweist:
ein inneres Koppelmodul (181), welches an dem inneren Drehteil (13) angeordnet ist, und
ein äußeres Koppelmodul (180), welches an dem äußeren Drehteil (14) angeordnet ist.

6. Stufenloses Getriebe (10) nach Anspruch 5,
**dadurch gekennzeichnet, dass**
das innere Koppelmodul (181) einen Masseausgleichsbolzen (181) zum Ausgleich einer Masse eines Lagerbolzens (180A) mindestens eines Koppelmoduls (180, 181) aufweist, mit welchem Lagerbolzen (180A) das innere und äußere Koppelmodul (181, 180) dreh/schwenkbar aneinander befestigt sind.

7. Stufenloses Getriebe (10) nach einem der vorangehenden Ansprüche, wobei das innere Koppelmodul mindestens einen Schlitz aufweist zur Aufnahme von mit Vorspannung laminierend aufgewickelten Carbonfasern 181D.

8. Stufenloses Getriebe (10) nach einem der vorangehenden Ansprüche, wobei das innere Drehteil (13) mindestens ein aufgewickeltes Blech (131, 132) aufweist.

9. Stufenloses Getriebe (10) nach Anspruch 8, wobei das mindestens eine aufgewickelte Blech (131, 132) in einem Rohr (134) angeordnet ist.

10. Stufenloses Getriebe (10) nach einem der vorhergehenden Ansprüche, wobei ein unteres Ende eines Klemmkörperelements (31A) konkav ausgebildet ist, wobei der Klemmkörper (31A) zur Lagerung einer der Koppelmechaniken (18) an dem inneren Drehteil (13) dient.

11. Stufenloses Getriebe (10) nach einem der vorhergehenden Ansprüche, wobei eine Lagerstelle (21) für ein Verstellelement (15) der Verstelleinrichtung in axialer Richtung mittig an einem Lager- und Führungsmodul (12) angeordnet ist, welches zur Lagerung des äußeren Drehteils (14) dient.

12. Stufenloses Getriebe (10) nach Anspruch 5,
**dadurch gekennzeichnet, dass**
das äußere und innere Koppelmodul (180, 181) um einen Winkel gegeneinander verschwenkbar sind und dieser Winkel kleiner als 180° ist.

13. Stufenloses Getriebe (10) nach einem der vorangehenden Ansprüchen,
**dadurch gekennzeichnet, dass**
die Exzentrizität des äußeren Drehteils (14) relativ zum inneren Drehteil (13) mit der Verstelleinrichtung mit Anschlägen begrenzt ist.

14. Stufenloses Getriebe (10) nach einem der vorangehenden Ansprüchen,
**dadurch gekennzeichnet, dass**
die Exzentrizität der Koppelmechanik (18) zwischen einem Gehäuse (19) und einem Lager- und Führungsmodul (12), welches zur Lagerung des äußeren Drehteils (14) dient, mit Anschlägen begrenzt ist.

15. Stufenloses Getriebe (10) nach einem der vorangehenden Ansprüchen,
**dadurch gekennzeichnet, dass**
ein Schmierstoffstrom in axialer Richtung entlang der Mantelfläche des inneren Drehteils (13) besteht, durch welchen eine Schmierstoffversorgung zwischen dem inneren Drehteil (13) und den Koppelmechaniken (18) vorgesehen ist.

## Claims

1. Continuously variable transmission (10), comprising an outer rotary part (14), an inner rotary part (13) which is arranged in the outer rotary part (14) in such a way that the inner and/or the outer rotary part (13, 14) are rotatable relative to one another,
a plurality of coupling mechanisms (18) for coupling the inner and outer rotary part (13, 14) to one another, and
an adjustment device for eccentric adjustment of the inner and outer rotary part (13, 14) relative to one another,
**characterised in that**
the continuously variable transmission (10) comprises a pump (30) for conveying a lubricant into the transmission (10) in the axial direction along a shell surface of the inner rotary part (13), and
sealing elements which are arranged on the inner rotary part (13) in the coupling mechanisms (18), or nozzles for conveying a predetermined amount of lubricant to the respective coupling mechanism (18).

2. Continuously variable transmission (10) according to claim 1, also comprising a housing (19) to accommodate the continuously variable transmission (10), wherein the pump (30) for conveying the lubricant is arranged in a circulation into and/or out of the housing (19).

3. Continuously variable transmission (10) according to claim 1 or 2, wherein the outer rotary part (14) has discs (142) which are spaced apart by bearing bolts (144) for the coupling mechanisms (18).

4. Continuously variable transmission (10) according to claim 1 or 2, wherein the outer rotary part (14) has two casings (150, 151) which are fastened to one another and are spaced apart by bearing bolts (144) for the coupling mechanisms (18).

5. Continuously variable transmission (10) according to one of the preceding claims, wherein one of the coupling mechanisms (18) comprises:
an inner coupling module (181) which is arranged on the inner rotary part (13) and
an outer coupling module (180) which is arranged on the outer rotary part (14).

6. Continuously variable transmission (10) according to claim 5,
**characterised in that**
the inner coupling module (181) has a mass balancing bolt (181) for balancing a mass of a bearing bolt (180A) of at least one coupling module (180, 181), and with this bearing bolt (180A) the inner and outer coupling module (181, 180) are fastened rotatably/pivotably to one another.

7. Continuously variable transmission (10) according to one of the preceding claims, wherein the inner coupling module has at least one slot to receive carbon fibres (181D) wound by lamination with pretension.

8. Continuously variable transmission (10) according to one of the preceding claims, wherein the inner rotary part (13) has at least one wound metal sheet (131, 132).

9. Continuously variable transmission (10) according to claim 8, wherein the at least one wound metal sheet (131, 132) is arranged in a tube (134).

10. Continuously variable transmission (10) according to one of the preceding claims, wherein a lower end of a clamping body element (31A) is of concave construction, wherein the clamping body element serves for mounting of one of the coupling mechanisms (18) on the inner rotary part (13).

11. Continuously variable transmission (10) according to one of the preceding claims, wherein a bearing point (21) for an adjusting element (15) of the adjustment device is arranged in the axial direction centrally on a bearing and guiding module (12) which serves for mounting of the outer rotary part (14).

12. Continuously variable transmission (10) according to claim 5,
**characterised in that**
the outer and inner coupling module (180, 181) can be swivelled by an angle with respect to one another and this angle is less than 180°.

13. Continuously variable transmission (10) according to one of the preceding claims,
**characterised in that**
the eccentricity of the outer rotary part (14) relative to the inner rotary part (13) is limited by the adjustment device with stops.

14. Continuously variable transmission (10) according to one of the preceding claims,
**characterised in that**
the eccentricity of the coupling mechanism (18) between a housing (19) and a bearing and guiding module (12) which serves for mounting of the outer rotary part (14) is limited by stops.

15. Continuously variable transmission (10) according to one of the preceding claims,
**characterised in that**
a lubricant stream exists in the axial direction along the shell surface of the inner rotary part (13), by which a lubricant supply is provided between the inner rotary part (13) and the coupling mechanisms (18).

## Revendications

1. Transmission à variation continue (10), comprenant un élément rotatif extérieur (14),
un élément rotatif intérieur (13) agencé dans l'élément rotatif extérieur (14) de telle manière que l'élément rotatif intérieur et/ou l'élément rotatif extérieur (13, 14) sont rotatifs l'un par rapport à l'autre,
plusieurs mécanismes d'accouplement (18) pour coupler l'élément rotatif intérieur avec l'élément rotatif extérieur (13, 14), l'un avec l'autre,
un dispositif de réglage pour le réglage excentrique de l'élément rotatif intérieur et de l'élément rotatif extérieur (13, 14) l'un par rapport à l'autre, **caractérisée en ce que**
la transmission à variation continue (10) comprend une pompe (30) pour le transport d'un lubrifiant vers la transmission (10) dans la direction axiale le long d'une surface périphérique de l'élément rotatif intérieur (13), et
des éléments d'étanchéité qui sont agencés sur l'élément rotatif intérieur (13) près des mécanismes de couplage (18), ou des buses pour l'acheminement de chaque mécanisme de couplage (18) avec une quantité prédéterminée de lubrifiant.

2. Transmission à variation continue (10) selon la revendication 1, comprenant en outre un boîtier (19) pour le logement de la transmission à variation continue (10), dans laquelle la pompe (30) pour le transport du lubrifiant est agencée dans un circuit dans et hors du boîtier (19).

3. Transmission à variation continue (10) selon la revendication 1 ou 2, dans laquelle l'élément rotatif extérieur (14) comporte des disques (142), lesquels sont séparés par des axes de palier (144) pour les mécanismes de couplage (18).

4. Transmission à variation continue (10) selon la revendication 1 ou 2, dans laquelle l'élément rotatif extérieur (14) comporte deux manchons (150, 151) fixés l'un contre l'autre, lesquels sont séparés par des axes de palier (144) pour les mécanismes de couplage (18).

5. Transmission à variation continue (10) selon l'une des revendications précédentes, dans laquelle un des mécanismes de couplage (18) comprend :
un module de couplage intérieur (181), lequel est agencé sur l'élément rotatif intérieur (13), et
un module de couplage extérieur (180), lequel est agencé sur l'élément rotatif extérieur (14).

6. Transmission à variation continue (10) selon la revendication 5,
**caractérisée en ce que**
le module de couplage intérieur (181) comporte un axe d'équilibrage de masse (181) pour équilibrer une masse d'un axe de palier (180A) d'au moins un module de couplage (180, 181), par lequel l'axe de palier (180A), le module de couplage intérieur et le module de couplage extérieur (181, 180) sont fixés l'un contre l'autre de manière rotative/pivotante.

7. Transmission à variation continue (10) selon l'une des revendications précédentes, dans laquelle le module de couplage intérieur présente au moins une fente pour la réception de fibres de carbone (181D) enroulées de manière stratifiée sous précontrainte.

8. Transmission à variation continue (10) selon l'une des revendications précédentes, dans laquelle l'élément rotatif intérieur (13) comporte au moins une tôle enroulée (131, 132).

9. Transmission à variation continue (10) selon la revendication 8, dans laquelle ladite au moins une tôle enroulée (131, 132) est disposée dans un tube (134).

10. Transmission à variation continue (10) selon l'une des revendications précédentes, dans laquelle une extrémité inférieure d'un élément de corps de serrage (31A) est prévue avec une forme concave, dans laquelle le corps de serrage (31A) sert au support d'un des mécanismes de couplage (18) sur l'élément rotatif intérieur (13).

11. Transmission à variation continue (10) selon l'une des revendications précédentes, dans laquelle un palier (21) pour un élément de réglage (15) du dispositif de réglage dans la direction axiale est prévu centralement sur un module de palier et de guidage (12), lequel sert au support de l'élément rotatif extérieur (14).

12. Transmission à variation continue (10) selon la revendication 5,
**caractérisée en ce que**
le module de couplage extérieur et le module de couplage intérieur (180, 181) sont pivotants suivant un angle l'un par rapport à l'autre, et cet angle est inférieur à 180°.

13. Transmission à variation continue (10) selon l'une des revendications précédentes,
**caractérisée en ce que**
l'excentricité de l'élément rotatif extérieur (14) par rapport à l'élément rotatif intérieur (13) est limitée par le dispositif de réglage au moyen de butées.

14. Transmission à variation continue (10) selon l'une des revendications précédentes,
**caractérisée en ce que**
l'excentricité du mécanisme de couplage (18) entre un boîtier (19) et un module de palier et de guidage (12), lequel sert au support de l'élément rotatif extérieur (14), est limitée par des butées.

15. Transmission à variation continue (10) selon l'une des revendications précédentes,
**caractérisée en ce que**
un flux de lubrifiant est présenté dans la direction axiale le long de la surface périphérique de l'élément rotatif intérieur (13), au moyen duquel est prévue une alimentation en lubrifiant entre l'élément rotatif intérieur (13) et les mécanismes de couplage (18).
